(19) **Europäisches Patentamt**
**European Patent Office**
**Office européen des brevets**

(11) **EP 4 787 483 A1**

(12) # EUROPEAN PATENT APPLICATION
published in accordance with Art. 153(4) EPC

(43) Date of publication:
**05.08.2026  Bulletin 2026/32**

(21) Application number: **24871861.1**

(22) Date of filing: **11.09.2024**

(51) International Patent Classification (IPC):
**H01M 4/525** (2010.01)    **H01M 4/36** (2006.01)

(52) Cooperative Patent Classification (CPC):
**H01M 4/36; H01M 4/525;** Y02E 60/10

(86) International application number:
**PCT/JP2024/032538**

(87) International publication number:
**WO 2025/070064 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.09.2023  JP 2023170237**

(71) Applicant: **Panasonic Energy Co., Ltd.**
**Moriguchi-shi, Osaka 570-8511 (JP)**

(72) Inventors:
• **AOKI, Yoshinori**
  **Kadoma-shi, Osaka 571-0057 (JP)**
• **FUJITANI, Naoya**
  **Kadoma-shi, Osaka 571-0057 (JP)**
• **INOUE, Katsuya**
  **Kadoma-shi, Osaka 571-0057 (JP)**
• **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE ACTIVE MATERIAL FOR NONAQUEOUS ELECTROLYTE SECONDARY BATTERY, AND NONAQUEOUS ELECTROLYTE SECONDARY BATTERY**

(57)    Provided is a positive electrode active material which contributes to an improvement of safety of secondary batteries. A positive electrode active material included in a nonaqueous electrolyte secondary battery contains a lithium transition metal composite oxide containing Ni, P, and at least one of Ca and Sr at prescribed content ratios and containing secondary particles formed with aggregated primary particles. The ratio m/n of the half width m of the diffraction peak of the (003) plane to the half width n of the diffraction peak of the (110) plane of the X-ray diffraction pattern by X-ray diffraction satisfies $0.75 \leq m/n \leq 0.85$, and in the elemental concentration distribution of the cross-section of the lithium transition metal composite oxide according to the time-of-flight secondary ion mass spectrometry, the ratio $I_{P\_OUT}/I_{P\_IN}$ of the normalized intensity $I_{P\_OUT}$ of P of the secondary particle surface to the normalized intensity $I_{P\_IN}$ of P inside the secondary particles satisfies $1 \leq I_{P\_OUT}/I_{P\_IN} \leq 150$.

Figure 1

**Description**

TECHNICAL FIELD

The present disclosure relates to a positive electrode active material for a non-aqueous electrolyte secondary battery and to a non-aqueous electrolyte secondary battery, and particularly relates to a positive electrode active material for a non-aqueous electrolyte secondary battery containing Ni at a high concentration and to a non-aqueous electrolyte secondary battery employing the positive electrode active material for a non-aqueous electrolyte secondary battery.

BACKGROUND ART

Lithium nickelate ($LiNiO_2$) has been known to have a high energy density, and battery characteristics such as reliability can be improved by partial substitution of Ni with Co, Al, Mn, or the like.
Patent Literature 1 discloses a positive electrode active material in which an oxide coating layer including $Li_3PO_4$ is formed on the surface of a lithium transition metal composite oxide containing Ni, Mn, Co, and Sr. Patent Literature 1 describes that the use of this positive electrode active material enhances the charge-discharge cycle performance of the secondary battery.

CITATION LIST

PATENT LITERATURE

PATENT LITERATURE 1: Japanese Patent No. 6749973

SUMMARY

It is noted that a lithium transition metal composite oxide with a Ni content of greater than or equal to 75% tends to undergo side reactions with a non-aqueous electrolyte and to have a layered crystal structure prone to collapse since a large amount of Li is extracted during charging. As such, in a non-aqueous electrolyte secondary battery including such a lithium transition metal composite oxide as the positive electrode, when the internal temperature of the battery rises due to overcharging or short-circuiting, further exothermic chemical reactions (self-heating reactions) inside the battery may proceed with the temperature increase, which may lead to activation of the safety valve of the battery. The technique described in Patent Literature 1 does not address improvement of safety for batteries, and there remains room to be further enhanced.
It is an advantage of the present disclosure to provide a positive electrode active material that contributes to improvement of the safety of the non-aqueous electrolyte secondary battery.
A positive electrode active material for a non-aqueous electrolyte secondary battery in one aspect of the present disclosure includes: a lithium transition metal composite oxide, wherein the lithium transition metal composite oxide contains Ni, P, and at least one of Ca or Sr and includes secondary particles formed by aggregation of primary particles; a Ni content in the lithium transition metal composite oxide, relative to the total number of moles of elements excluding Li and O, satisfies 75 mol% ≤ Ni content ≤ 95 mol%; a P content in the lithium transition metal composite oxide, relative to the total number of moles of elements excluding Li and O, satisfies 0 mol% < P content ≤ 2 mol%; a total content of Ca and Sr in the lithium transition metal composite oxide, relative to the total number of moles of elements excluding Li and O, satisfies 0 mol% < Ca content + Sr content ≤ 2 mol%; in an X-ray diffraction pattern obtained by X-ray diffraction, a ratio m/n of a half-width m of a diffraction peak of a (003) plane to a half-width n of a diffraction peak of a (110) plane satisfies 0.75 ≤ m/n ≤ 0.85; and in an element concentration distribution of a cross section of the lithium transition metal composite oxide as analyzed using time-of-flight secondary ion mass spectrometry, a ratio $I_{P\_OUT}/I_{P\_IN}$ of a normalized intensity $I_{P\_OUT}$ of P on surface of the secondary particles to a normalized intensity $I_{P\_IN}$ of P inside the secondary particles satisfies $1 \leq I_{P\_OUT}/I_{P\_IN} \leq 150$.
The non-aqueous electrolyte secondary battery in one aspect of the present disclosure comprises a positive electrode including the positive electrode active material for a non-aqueous electrolyte secondary battery, a negative electrode, and a non-aqueous electrolyte.
According to one aspect of the present disclosure, the positive electrode active material for a non-aqueous electrolyte secondary battery improves the safety of the secondary battery, and in particular, improves the safety of the secondary battery at high temperatures. According to the method for manufacturing a positive electrode active material for a non-aqueous electrolyte secondary battery in one aspect of the present disclosure, this positive electrode active material for a non-aqueous electrolyte secondary battery can be produced.

BRIEF DESCRIPTION OF DRAWING

FIG. 1 is a longitudinal sectional view of a non-aqueous electrolyte secondary battery as an example of an embodiment.

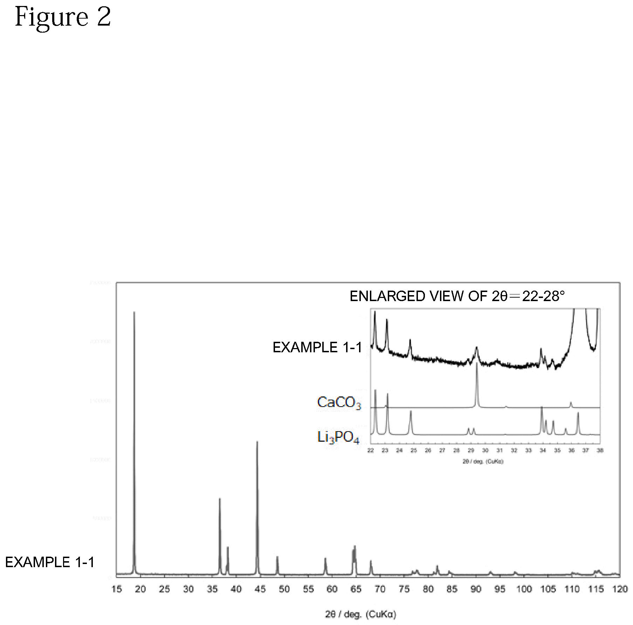

FIG. 2 shows an X-ray diffraction pattern obtained when a positive electrode active material of Example 1-1 is measured by X-ray diffraction.

DESCRIPTION OF EMBODIMENTS

In the layered structure of the lithium transition metal composite oxide, a layer of a transition metal such as Ni and a Li layer are present, and Li ions present in the Li layer reversibly enter and exit, whereby the charge-discharge reaction of a battery proceeds. Generally, a lithium transition metal composite oxide containing Ni as a main component is known as a high-capacity positive electrode active material. However, a lithium transition metal composite oxide with a Ni content of greater than or equal to 75% tends to undergo side reactions with a non-aqueous electrolyte and to have a layered crystal structure prone to collapse since a large amount of Li is extracted during charging. Therefore, when the temperature of the battery rises due to overcharging or short-circuiting, further exothermic chemical reactions (self-heating reactions) inside the battery may proceed with the temperature increase, possibly resulting in activation of the safety valve of the battery described later.

Patent Literature 1 discloses a positive electrode active material in which an oxide coating layer including $Li_3PO_4$ is formed on the surface of a lithium transition metal composite oxide containing Ni, Mn, Co, and Sr, from the viewpoint of improving charge-discharge cycle characteristics. However, Patent Literature 1 does not address improvement of the safety of the battery.

Accordingly, the present inventors have made intensive studies to solve the above problem, and as a result, found that in a lithium transition metal composite oxide having a Ni content of greater than or equal to 75% contains P and at least one of Ca and Sr at predetermined amounts, the ratio m/n of the half-width m of the diffraction peak of the (003) plane to the half-width n of the diffraction peak of the (110) plane in the X-ray diffraction pattern obtained by X-ray diffraction satisfies $0.75 \leq m/n \leq 0.85$, and furthermore, when the element concentration distribution of the cross section of the lithium transition metal composite oxide as analyzed using time-of-flight secondary ion mass spectrometry has the ratio $I_{P\_OUT}/I_{P\_IN}$ of the normalized intensity $I_{P\_OUT}$ of P on the surfaces of the secondary particles to the normalized intensity $I_{P\_IN}$ of P inside the secondary particles satisfying $1 \leq I_{P\_OUT}/I_{P\_IN} \leq 150$. When $I_{P\_OUT}/I_{P\_IN}$ satisfies the above range, P is distributed not only on the surfaces of but also inside the secondary particles in a balanced manner, and by the coexistence of such P distributed on the surfaces of and inside the secondary particles together with at least one of Ca and Sr, side reactions with the non-aqueous electrolyte can be effectively suppressed. In addition, adjusting the ratio of half-widths within the defined range stabilizes the crystal structure, and therefore, it is presumed that these synergistic effects suppress self-heating reactions of the battery and improve the safety of the battery.

Hereinafter, an example of an embodiment of the non-aqueous electrolyte secondary battery according to the present disclosure will be described in detail. Hereinafter, a cylindrical battery including a wound electrode assembly housed in a cylindrical outer case will be illustrated, but the electrode assembly is not limited to the wound-type, and may be a laminate electrode assembly in which a plurality of positive electrodes and a plurality of negative electrodes are alternately stacked one by one via separators. Furthermore, the outer case is not limited to a cylindrical shape, and may, for example, be rectangular or coin-shaped. The battery case may also be formed of a laminated sheet including a metal layer and a resin layer.

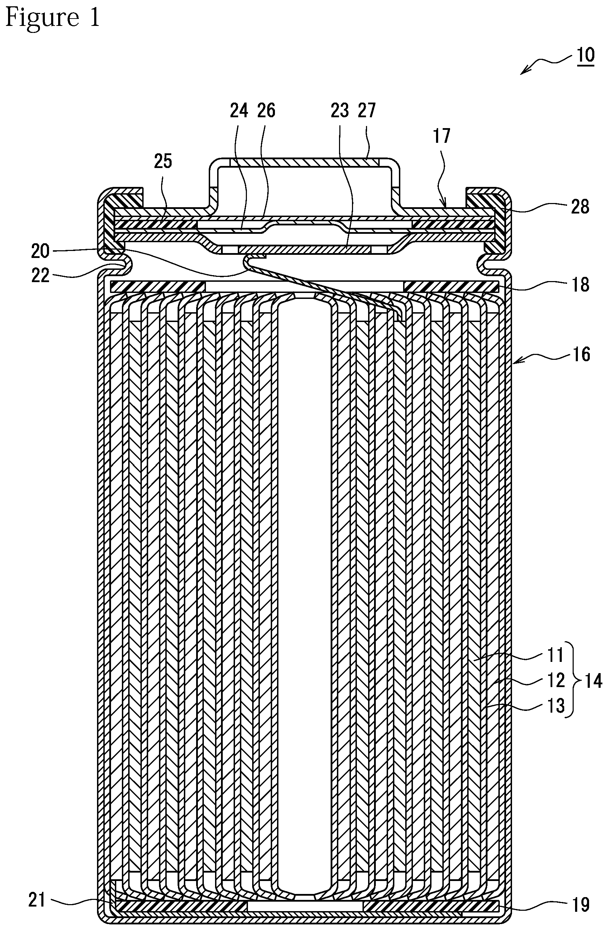

FIG. 1 is an axial sectional view of a cylindrical secondary battery 10 as an example of an embodiment. As shown in FIG. 1, the secondary battery 10 comprises a wound electrode assembly 14, an electrolyte, and an outer case 16 that houses the electrode assembly 14 and the electrolyte. The electrode assembly 14 includes a positive electrode 11, a negative electrode 12, and a separator 13 and has a wound structure in which the positive electrode 11 and the negative electrode 12 are spirally wound with the separator 13 therebetween. The outer case 16 is a bottomed cylindrical metal container having an opening on one side in the axial direction, and the opening of the outer case 16 is closed off by a sealing assembly 17. Hereinafter, for convenience of explanation, the sealing assembly 17 side of the battery is described as the top, and the bottom side of the outer case 16 is described as the bottom.

The positive electrode 11, the negative electrode 12, and the separator 13, which constitute the electrode assembly 14, are all elongated rectangular members, and are alternately laminated in the radial direction of the electrode assembly 14 by being spirally wound in the longitudinal direction. The separator 13 isolates the positive electrode 11 from the negative electrode 12. The negative electrode 12 is formed to be one size larger than the positive electrode 11 to prevent precipitation of lithium. That is, the negative electrode 12 is formed to be longer than the positive electrode 11 in the longitudinal direction and the transverse direction. The two separators 13 are formed at least one size larger than the positive electrode 11 and disposed to sandwich the positive electrode 11, for example. The electrode assembly 14 comprises a positive electrode lead 20 connected to the positive electrode 11 by means of welding or the like, and a negative electrode lead 21 connected to the negative electrode 12 by means of welding or the like. In the electrode assembly 14, the longitudinal direction of the positive electrode 11 and the negative electrode 12 corresponds to the winding direction, while the transverse direction of the positive electrode 11 and the negative electrode 12 corresponds to the axial direction. That is, end surfaces of the positive electrode 11 and the negative electrode 12 in the transverse direction form end surfaces of the electrode assembly 14 in the axial direction.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends outside the insulating plate 19 to the side of the bottom of the outer case 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the outer case 16 by means of welding or the like, and the outer case 16 serves as a negative electrode terminal.

A gasket 28 is provided between the outer case 16 and the sealing assembly 17 to ensure that the interior of the battery is tightly sealed. The outer case 16 includes a grooved portion 22 formed to have a part of a side surface portion projected inward and support the sealing assembly 17. The grooved portion 22 is preferably annularly formed along the peripheral direction of the outer case 16, supporting the sealing assembly 17 by the upper surface thereof. The sealing assembly 17 is fixed to an upper part of the outer case 16 by means of the grooved portion 22 and an opening end portion of the outer case 16 which is crimped to the sealing assembly 17.

The sealing assembly 17 has a structure in which an internal terminal plate 23, a lower vent member 24, an insulating member 25, an upper vent member 26, and a cap 27 are layered in the order from the side of the electrode assembly 14 and functions as a safety vent. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from the opening portion of the cap 27.

Hereinafter, the positive electrode 11, the negative electrode 12, the separator 13, and the non-aqueous electrolyte, all of which constitute the secondary battery 10, particularly, the positive electrode 11 will be described in detail.

[Positive Electrode]

The positive electrode 11, for example, has a positive electrode core and a positive electrode mixture layer formed on the surface of the positive electrode core. The positive electrode mixture layer is preferably formed on both the surfaces of the positive electrode core. As the positive electrode core, a foil of a metal that is stable in the potential range of the positive electrode 11, such as aluminum or an aluminum alloy, and a film with the metal disposed on the surface layer, or the like can be used. The thickness of the positive electrode core is, for example, greater than or equal to 10 $\mu$m and less than or equal to 30 $\mu$m.

The positive electrode mixture layer, for example, includes a positive electrode active material, a conductive agent, and a binder. The thickness of the positive electrode mixture layer is greater than or equal to 10 $\mu$m and less than or equal to 150 $\mu$m, for example, on one side of the positive electrode core. The positive electrode 11 can be produced, for example, by coating a positive electrode mixture slurry including a positive electrode active material and a conductive agent on the surface of the positive electrode core, drying the coating, and then rolling the dried coating to form the positive electrode mixture layer on both the surfaces of the positive electrode core.

Examples of the conductive agent included in the positive electrode mixture layer include carbon-based particles such as carbon black (CB) including acetylene black (AB) and Ketjenblack, carbon nanotubes (CNTs), graphene, and graphite. These may be used singly or in combination with two or more kinds thereof. The content ratio of the conductive agent in the positive electrode mixture layer is, for example, greater than or equal to 0.1 mass% and less than or equal to 10 mass% relative to the total mass of the positive electrode mixture layer.

Examples of the binder included in the positive electrode mixture layer include fluorine-based resins such as polytetrafluoroethylene (PTFE) and polyvinylidene fluoride (PVDF), polyimide-based resins, acrylic-based resins, polyolefin-based resins, and polyacrylonitrile (PAN). These may be used singly or in combination with two or more kinds thereof. The content ratio of the binder in the positive electrode mixture layer is, for example, greater than or equal to 0.1 mass% and less than or equal to 10 mass% relative to the total mass of the positive electrode mixture layer.

The positive electrode active material included in the positive electrode mixture layer includes a lithium transition metal composite oxide. The lithium transition metal composite oxide contains Ni, P, and at least one of Ca or Sr.

The Ni content in the lithium transition metal composite oxide, relative to the total number of moles of elements excluding Li and O, satisfies 75 mol% ≤ Ni content ≤ 95 mol%. From the viewpoint of achieving both higher capacity and stability of the structure, the Ni content preferably falls within the range. The lower limit of the Ni content is preferably greater than or equal to 80 mol%, and more preferably greater than or equal to 85 mol%.

The P content in the lithium transition metal composite oxide, relative to the total number of moles of elements excluding Li and O, satisfies 0 mol% ≤ P content ≤ 2 mol%. By allowing P at this content level to coexist with Ca and Sr, the safety of the lithium transition metal composite oxide can be improved. The lower limit of the P content is, for example, 0.01 mol%.

The total of the Ca content and the Sr content in the lithium transition metal composite oxide, relative to the total number of moles of elements excluding Li and O, satisfies 0 mol% ≤ Ca content + Sr content ≤ 2 mol%. By allowing at least one of Ca and Sr at this content level to coexist with P, the safety of the lithium transition metal composite oxide can be improved. The lower limit of the total of the Ca content and the Sr content is, for example, 0.01 mol%.

The lithium transition metal composite oxide preferably contains both Ca and Sr. Accordingly, the safety of the lithium transition metal composite oxide can be significantly improved.

The lithium transition metal composite oxide preferably satisfies Ca content > Sr content. Accordingly, the safety of the lithium transition metal composite oxide can be significantly improved.

The lithium transition metal composite oxide may further contain B. The B content in the lithium transition metal composite oxide, relative to the total number of moles of elements excluding Li and O, satisfies 0 mol% ≤ B content ≤ 3 mol%, for example. The lower limit of the B content is, for example, 0.01 mol%. It is considered that, by containing a predetermined amount of B, the lithium transition metal composite oxide can further enhance the effect of suppressing side reactions with the non-aqueous electrolyte.

The lithium transition metal composite oxide may further contain Sb. The Sb content in the lithium transition metal composite oxide example, relative to the total number of moles of elements excluding Li and O, satisfies 0 mol% ≤ Sb content ≤ 1 mol%, for example. The lower limit of the Sb content is, for example, 0.01 mol%. It is considered that, by containing a predetermined amount of Sb, the lithium transition metal composite oxide can further stabilize the crystal structure.

The lithium transition metal composite oxide is a composite oxide represented by a general formula $Li_aNi_{x-}Me_yP_zCa_sSr_tO_{2-b}$, wherein $0.8 \leq a \leq 1.2$, $0.75 \leq x \leq 0.95$, $0.01 \leq y < 0.25$, $0 < z \leq 0.02$, $0 < s + t \leq 0.02$, $0 \leq b \leq 0.05$, $x + y + z + s + t = 1$, and Me represents at least one element selected from the group consisting of Mn, Co, Al, B, Sb, Si, Ti, Fe, Zr, Nb, Mo, Sn, W, and Bi. The proportion of metal elements contained in the lithium transition metal composite oxide can be measured using, for example, an inductively coupled plasma atomic emission spectrometer (ICP-AES). The upper limit of the Me content is, for example, 24 mol% relative to the total number of moles of elements excluding Li and O.

The lithium transition metal composite oxide includes secondary particles formed by aggregation of primary particles. The particle diameter of the primary particles is, for example, greater than or equal to 0.02 μm and less than or equal to 2 μm. The particle diameter of the primary particles is measured as the diameter of a circumscribed circle in particle images observed by scanning electron microscopy (SEM). The average particle diameter of the secondary particles is, for example, greater than or equal to 2 μm and less than or equal to 30 μm. As used herein, the average particle diameter refers to the volume-based median diameter (D50). The D50 means the particle diameter at which the cumulative frequency in the volume-based particle size distribution reaches 50% from the smaller particle side, which is also referred to as the median diameter. The particle size distribution of the secondary particles can be measured using a laser diffraction particle size distribution measuring device (e.g., MT3000II, manufactured by MicrotracBEL Corp.), with water used as the dispersion medium.

P is present on the surfaces of and inside the secondary particles. P is present inside the secondary particles, for example, on the surfaces of the primary particles or in a region less than or equal to 30 nm from surfaces of the primary particles in the internal direction. Accordingly, the effect of suppressing side reactions between the non-aqueous electrolyte and the lithium transition metal composite oxide becomes remarkable. P may be present, on the surfaces of and inside the secondary particles, as a P-containing compound. Examples of the P-containing compound include $P_2O_5$ and $Li_3PO_4$.

Ca and Sr are present on the surfaces of and inside the secondary particles. Ca and Sr are present inside the secondary particles, for example, on the surfaces of the primary particles or in a region less than or equal to 30 nm from surfaces of the primary particles in the internal direction. By the coexistence of at least one of Ca and Sr with P on the surfaces of the primary particles or in a region less than or equal to 30 nm from surfaces of the primary particles in the internal direction, the effect of suppressing side reactions between the non-aqueous electrolyte and the lithium transition metal composite oxide becomes more remarkable.

Ca may be present, on the surfaces of and inside the secondary particles, as a Ca-containing compound. Examples of the Ca-containing compound include CaO, $Ca(OH)_2$, and $CaCO_3$. Sr may be present, on the surfaces of and inside the secondary particles, as a Sr-containing compound. Examples of the Sr-containing compound include SrO, $Sr(OH)_2$, and $SrCO_3$. Ca and Sr may be present, on the surfaces and inside the secondary particles, as a compound containing Ca or Sr and P. Examples of such a compound include $CaHPO_4$, $SrHPO_4$, $Ca(H_2PO_4)_2$, $Ca_3(PO_4)_2$, $Sr(H_2PO_4)_2$, and $Sr_3(PO_4)_2$. The presence of Ca, Sr, and P on the surfaces of and inside the secondary particles can be confirmed by, for example, energy dispersive X-ray spectroscopy (TEM-EDX) in addition to the time-of-flight secondary ion mass spectrometry described below.

In the element concentration distribution of the cross section of the lithium transition metal composite oxide as analyzed using time-of-flight secondary ion mass spectrometry (TOF-SIMS), the ratio $I_{P\_OUT}/I_{P\_IN}$ of the normalized intensity $I_{P\_OUT}$ of P on the surfaces of the secondary particles to the normalized intensity $I_{P\_IN}$ of P inside the secondary particles satisfies $1 \leq I_{P\_OUT}/I_{P\_IN} \leq 150$ (hereinafter, $I_{P\_OUT}/I_{P\_IN}$ referred to as a normalized intensity ratio of P). Accordingly, the safety of the battery is improved. It is considered that P is distributed in a balanced manner on both the surfaces of and inside the secondary particles, and the P thus distributed coexists with at least one of Ca and Sr, whereby side reactions with the non-aqueous electrolyte can be effectively suppressed.

The normalized intensity ratio of P is obtained by measurement under the following conditions using a time-of-flight secondary ion mass spectrometer (TOF-SIMS5, manufactured by IONTOF GmbH):

Primary ion: $Bi_3^+$
Ion voltage: 30 kV
Ion current: 0.03 pA @ 100 us
Observation range: 50 μm × 50 μm
Mass range: 60 us (up to 310 amu)
Detection: 4 frames/scan, 150 scans

An image showing the concentration distributions of Ni, and P obtained by the above measurement is divided into 256 × 256 pixels, and the detection intensities of Ni and P are calculated for each pixel. Furthermore, the ratio of the detection intensity of P to the detection intensity of Ni is calculated as a normalized intensity $I_P$ of P.

From the above image, the region up to 0.5 μm inward from the surfaces of the secondary particles is defined as the surfaces of the secondary particles, and the pixels included in the surfaces of the secondary particles (hereinafter referred to as "surface pixels") are specified. $I_{P\_OUT}$ is defined as the set of $I_P$ corresponding to the respective surface pixels. Furthermore, the region inside the above-defined surfaces of the secondary particles is defined as the interior of the secondary particles, and the pixels included in the surfaces of the secondary particles (hereinafter referred to as "interior pixels") are specified. $I_{P\_IN}$ is defined as the set of $I_P$ corresponding to the respective interior pixels. From the normalized intensity of P on the surfaces of and inside the secondary particles obtained as described above, the normalized intensity ratio of P ($I_{P\_OUT}/I_{P\_IN}$) is calculated. The sample for cross-sectional observation may be a sample in which the lithium transition metal composite oxide is embedded in a resin or the like, or may be a positive electrode mixture layer including the lithium transition metal composite oxide.

In the element concentration distribution of the cross section of the lithium transition metal composite oxide analyzed using TOF-SIMS, the ratio $I_{Ca+Sr\_OUT}/I_{Ca+Sr\_IN}$ of the normalized intensity $I_{Ca+Sr\_OUT}$ of Ca and Sr on the surfaces of the secondary particles to the normalized intensity $I_{Ca+Sr\_IN}$ of Ca and Sr inside the secondary particles preferably satisfies $0.7 \leq I_{Ca+Sr\_OUT}/I_{Ca+Sr\_IN} \leq 20$ (hereinafter, similar to $I_{P\_OUT}/I_{P\_IN}$, $I_{Ca+Sr\_OUT}/I_{Ca+Sr\_IN}$ is referred to as the normalized intensity ratio of Ca and Sr). As a result, the synergistic effect with P becomes more remarkable. The normalized intensity ratio of Ca and Sr ($I_{Ca+Sr\_OUT}/I_{Ca+Sr\_IN}$) is obtained in the same manner as for P, by calculating $I_{Ca\_OUT}$, $I_{Ca\_IN}$, $I_{Sr\_OUT}$, and $I_{Sr\_IN}$ to define the sum of $I_{Ca\_OUT}$ and $I_{Sr\_OUT}$ as $I_{Ca+Sr\_OUT}$ and the sum of $I_{Ca\_IN}$ and $I_{Sr\_IN}$ as $I_{Ca+Sr\_IN}$.

The normalized intensity ratio of P ($I_{P\_OUT}/I_{P\_IN}$) and the normalized intensity ratio of Ca and Sr ($I_{Ca+Sr\_OUT}/I_{Ca+Sr\_IN}$) satisfy, for example, normalized intensity ratio of P ($I_{P\_OUT}/I_{P\_IN}$)+ normalized intensity ratio of Ca and Sr ($I_{Ca+Sr\_OUT}/I_{Ca+Sr\_IN}$) $\geq 2$.

In a lithium transition metal composite oxide, the ratio m/n of the half-width m of the diffraction peak of the (003) plane to the half-width n of the diffraction peak of the (110) plane in the X-ray diffraction pattern obtained by X-ray diffraction satisfies $0.75 \leq m/n \leq 0.85$. When m/n is less than 0.75, the distortion of the layered structure becomes excessive, and the layered structure becomes brittle. The upper limit of m/n is, for example, 0.85. When m/n is greater than 0.85, the battery capacity may decrease.

The X-ray diffraction pattern is obtained by powder X-ray diffractometry under the following conditions using a powder X-ray diffractometer (product name: "SmartLab", manufactured by Rigaku Corporation, with a Cu-Kα radiation source):

Measurement range: 15 to 120°
Scan speed: 4°/min

Analysis range: 30 to 120°
Background: B-spline
Profile function: Split pseudo-Voigt function
Constraint conditions: Li(3a) + Ni(3a) = 1
Ni(3a) + Ni(3b) = $\alpha$ ($\alpha$ is the proportion of Ni content in each case)
ICSD No.: 98-009-4814

The crystallite size s of lithium transition metal composite oxide, as calculated from the half-width of the diffraction peak of the (104) plane in the X-ray diffraction pattern obtained by X-ray diffraction according to Scherrer equation, preferably satisfies 300 Å $\leq$ s $\leq$ 700 Å from the viewpoint of increasing battery capacity and improving battery output characteristics. Scherrer equation is represented by the following formula, where s is the crystallite size, $\lambda$ denotes the wavelength of the X-ray, B denotes the half-width of the diffraction peak of the (104) plane, $\theta$ denotes the diffraction angle (rad), and K denotes the Scherrer constant. In the present embodiment, K is 0.9.

$$s = K\lambda/B\cos\theta$$

"In the X-ray diffraction pattern obtained by X-ray diffraction measurement of a lithium transition metal composite oxide, a peak derived from $CaCO_3$ may be in the range of 29.4 $\pm$ 0.3°. In this case, the effect of further suppressing side reactions between the non-aqueous electrolyte and the lithium transition metal composite oxide can be obtained.

The lithium transition metal composite oxide may have a layered structure. Examples of the layered structures of the lithium transition metal composite oxide include a layered structure belonging to the space group R-3m and a layered structure belonging to the space group C2/m. From the viewpoint of higher capacity and crystallographic stability, the lithium transition metal composite oxide preferably has a layered structure belonging to the space group R-3m. The layered structure of the lithium transition metal composite oxide may include a transition metal layer and a Li layer.

In the layered structure of a lithium transition metal composite oxide, the proportion of metal elements other than Li present in the Li layer is less than or equal to 8 mol% relative to the total number of moles of elements excluding Li and O in the lithium transition metal composite oxide. When the proportion of metal elements other than Li in the Li layer is greater than 8 mol%, the diffusivity of Li ions in the Li layer decreases, leading to a decrease in the battery capacity. The metal elements other than Li present in the Li layer are mainly Ni, but may also include other metal elements. The proportion of metal elements other than Li in the Li layer is, for example, greater than or equal to 0.1 mol%.

The proportion of metal elements other than Li present in the Li layer of the layered structure is obtained from the results of Rietveld analysis of the X-ray diffraction pattern obtained by the above powder X-ray diffraction measurement of the lithium transition metal composite oxide. For the Rietveld analysis of the X-ray diffraction pattern, for example, Rietveld analysis software SmartLab Studio II (Rigaku Corporation) can be used.

The positive electrode mixture layer may include, in addition to the positive electrode active material of the present embodiment, other positive electrode active materials. Examples of such other positive electrode active materials include lithium transition metal composite oxides free of Ca, Sr, and P.

Next, an example of a method for producing the positive electrode active material according to the present embodiment will be described. The method for producing the positive electrode active material includes, for example, the steps of mixing a metal oxide containing at least Ni, a Li raw material, a P raw material, and at least one of a Ca raw material and an Sr raw material to obtain a mixture, and firing the mixture to obtain the positive electrode active material.

A metal oxide containing at least Ni can be produced by separately adding a solution of metal salts containing Ni, Co, Al, Mn, and the like and an alkaline solution such as sodium hydroxide dropwise into a stirred reaction vessel containing a pH-adjusted solution, adjusting the pH to the alkaline range (e.g., 8.5 to 12.5) to precipitate (coprecipitate) a composite hydroxide, and subjecting the metal hydroxide to heat treatment. The firing temperature is not particularly limited, but is in the range of, for example, greater than or equal to 250°C and less than or equal to 600°C.

Next, a mixture is obtained by mixing a metal oxide containing at least Ni, a Li raw material, a P raw material, and at least one of a Ca raw material and an Sr raw material. Examples of the Li raw material include $Li_2CO_3$, LiOH, $Li_2O_2$, $Li_2O$, $LiNO_3$, $LiNO_2$, $Li_2SO_4$, $LiOH \cdot H_2O$, LiH, and LiF. Examples of the P raw material include $P_2O_5$, $CaHPO_4$, $Ca(H_2PO_4)_2$, and $Ca_3(PO_4)_2$. Examples of the Ca raw material include $Ca(OH)_2$, $CaHPO_4$, $Ca(H_2PO_4)_2$, $Ca_3(PO_4)_2$, CaO, $CaCO_3$, $CaSO_4$, $Ca(NO_3)_2$, $CaCl_2$, and $CaAlO_4$. Examples of the Sr raw material include $Sr(OH)_2$, $SrHPO_4$, $Sr(H_2PO_4)_2$, $Sr_3(PO_4)_2$, SrO, $SrCO_3$, $SrSO_4$, $Sr(NO_3)_2$, $SrCl_2$, and $SrAlO_4$. Note that $CaHPO_4$, $Ca(H_2PO_4)_2$, and $Ca_3(PO_4)_2$ are raw materials capable of adding Ca and P, while $SrHPO_4$, $Sr(H_2PO_4)_2$, and $Sr_3(PO_4)_2$ are raw materials capable of adding Sr and P. In addition, Me raw material may be mixed at the time of mixing. Examples of the Me raw material include $ZrO_2$, $Nb_2O_5$, $Nb_2O_5 \cdot nH_2O$, $TiO_2$, $Ti(OH)_4$, SiO, $SiO_2$, $Li_2MoO_4$, $MoO_3$, $H_2MoO_4$, $WO_3$, $Li_2WO_4$, $Al(OH)_2$, $Al_2O_3$, $Al_2(SO_4)_3$, $Al(NO_3)_3$, $Fe(OH)_2$, $Fe_2O_3$, $SnO_2$, $Bi(OH)_3$, $Bi_2O_3$, $H_3BO_3$, $B_2O_3$, and $Sb_2O_3$.

The mixture is fired to obtain a lithium transition metal composite oxide serving as a positive electrode active material. The mixture is fired, for example, in an oxygen stream with an oxygen concentration of greater than or equal to 60%, with the oxygen flow rate set within a range of greater than or equal to 0.1 L/min and less than or equal to 4 L/min per 10 cm$^3$ of the firing furnace, or at greater than or equal to 1 L/min per kg of the mixture. In the firing conditions, the first set temperature is set at less than or equal to 450°C, the holding time at the first set temperature is in the range of greater than or equal to 0 hours and less than or equal to 8 hours, and the temperature rising rate at less than or equal to 450°C is in the range of greater than 1.5°C/min and less than or equal to 6.0°C/min. The second set temperature is set at less than or equal to 450°C and greater than or equal to 680°C, the holding time at the second set temperature is in the range of greater than or equal to 0 hours and less than or equal to 8 hours, and the temperature rising rate at less than or equal to 450°C and greater than or equal to 680°C is in the range of greater than 1.0°C/min and less than or equal to 4.5°C/min. The peak temperature is in the range of greater than or equal to 690°C and less than or equal to 900°C. The temperature rising rate from greater than 680°C to the peak temperature may, for example, be in the range of greater than or equal to 0.1°C/min and less than or equal to 3.5°C/min. In addition, the holding time at the peak temperature may be in the range of greater than or equal to 1 hour and less than or equal to 10 hours. The firing step may also involve a multi-stage firing, and multiple settings may be applied for each temperature region as long as they fall within the above-defined ranges. For example, the first set temperature, the second set temperature, the respective temperature rising rates up to the peak temperature, and the respective holding times may be modified to change the crystallinity of the lithium transition metal composite oxide, thereby adjusting values of the ratio m/n of the half-widths.

The lithium transition metal composite oxide thus produced may subsequently undergo a washing and drying step and a heat treatment step. The washing and drying step can be performed by known methods and conditions. Note that a Me raw material may be added to the cake-like composition obtained after washing or during the heat treatment step. The heat treatment step is performed, for example, in vacuum, in an oxygen stream, or in air, at a temperature of greater than or equal to 150°C and less than or equal to 600°C. Examples of Me raw materials to be added after washing or during the heat treatment step include tungsten oxide ($WO_3$), lithium tungstate ($Li_2WO_4$, $Li_4WO_5$, or $Li_6W_2O_9$), boric acid ($H_3BO_3$), lithium borate ($Li_2B_4O_7$, $Li_3BO_3$, $LiB_3O_5$, or $LiBO_2$), aluminum oxide ($Al_2O_3$), aluminum sulfate ($Al_2(SO_4)_3$), calcium sulfate ($CaSO_4$), sodium sulfate ($Na_2SO_4$), magnesium sulfate ($MgSO_4$), calcium phosphate ($Ca_3(PO_4)_2$), and calcium hydrogen phosphate ($CaHPO_4$).

[Negative Electrode]

The negative electrode 12 may have, for example, a negative electrode core and a negative electrode mixture layer formed on the surface of the negative electrode core, or a metal Li foil may be used as the negative electrode 12. The negative electrode 12 may have a negative electrode core, and lithium metal may be deposited on the surface of the negative electrode core by charging. When the negative electrode 12 has a negative electrode mixture layer, the negative electrode mixture layer is preferably formed on both the surfaces of the negative electrode core. As the negative electrode core, a metal foil that is stable in the potential range of the negative electrode 12, such as copper or a copper alloy, or a film with the metal disposed on a surface layer may be used. The thickness of the negative electrode core is, for example, greater than or equal to 5 μm and less than or equal to 30 μm. The negative electrode mixture layer includes, for example, a negative electrode active material and a binder. The thickness of the negative electrode mixture layer is greater than or equal to 10 μm and less than or equal to 150 μm, for example, on one side of the negative electrode core. The negative electrode 12 can be produced, for example, by coating a negative electrode mixture slurry including a negative electrode active material and a binder on the surface of the negative electrode core, drying the coating, and rolling the dried coating to form the negative electrode mixture layer on both the surfaces of the negative electrode core.

As the negative electrode active material included in the negative electrode mixture layer, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, a Si-containing compound represented by $SiO_x$ ($0.5 \leq x \leq 1.6$) or a Si-containing compound in which fine particles of Si are dispersed in a lithium silicate phase represented by $Li_{2y}SiO_{(2+y)}$ ($0 < y < 2$) may be used in combination with graphite.

Examples of the binder included in the negative electrode mixture layer include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in combination with two or more kinds thereof.

[Separator]

As the separator 13, a porous sheet having ion permeability and insulation properties may be used. Specific examples of the porous sheet include microporous films, woven fabrics, and nonwoven fabrics. Suitable materials for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.

A filler layer including an inorganic filler may be formed at the interface between the separator 13 and at least one of the groups consisting of the positive electrode 11 and the negative electrode 12. Examples of the inorganic filler include oxides containing metal elements such as Ti, Al, Si, and Mg, and phosphate compounds. The filler layer can be formed by applying a slurry containing the filler to the surface of the positive electrode 11, the negative electrode 12, or the separator 13.

[Non-Aqueous Electrolyte]

The non-aqueous electrolyte has, for example, lithium-ion conductivity. The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved therein. For the non-aqueous solvent, esters, ethers, nitriles such as acetonitrile, amides such as dimethylformamide, and a mixed solvent of greater than or equal to two thereof, and the like are used, for example. The non-aqueous solvent may contain a halogen-substituted product in which hydrogen of these solvents is at least partially replaced with a halogen atom such as fluorine. Examples of the halogen-substituted product include fluorinated cyclic carbonate esters such as fluoroethylene carbonate (FEC), fluorinated linear carbonate esters, and fluorinated linear carboxylic acid esters such as methyl fluoropropionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as $\gamma$-butyrolactone (GBL) and $\gamma$-valerolactone (GVL); and linear carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include $LiClO_4$, $LiBF_4$, $LiPF_6$, $LiAlC_4$, $LiSbF_6$, $LiSCN$, $LiCF_3SO_3$, $LiCF_3CO_2$, $LiAsF_6$, $LiB_{10}C_{l10}$, lower aliphatic carboxylic acid lithium salts, $LiCl$, $LiBr$, $LiI$, phosphate salts, borate salts, and imide salts. Examples of the phosphate salts include lithium difluorophosphate ($LiPO_2F_2$), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluor-oethanesulfonyl)imide ($LiN(C_2F_5SO_2)_2$). Among these, $LiPF_6$ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 mol and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of the phenolic compounds include phenol and hydroxytoluene. Examples of benzene compounds include fluorobenzene, hexafluorobenzene, and cyclohexylbenzene (CHB).

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

EXAMPLES

Hereinafter, the present disclosure will be described in more detail with reference to Examples and Comparative Examples, but the present disclosure is not limited to Examples.

<Example 1-1>

[Production of Positive Electrode Active Material]

A composite hydroxide represented by $[Ni_{0.90}Co_{0.06}Mn_{0.04}](OH)_2$ obtained by a coprecipitation method was fired at 400°C for 8 hours to obtain a metal oxide including Ni, Co, and Mn. Then, the metal oxide and $CaHPO_4$ were mixed together so that the molar ratios of Ca and P to the total amount of the metal elements were each 0.25 mol% and lithium hydroxide monohydrate ($LiOH \cdot H_2O$) was further mixed so that the molar ratio of Li to the total amount of Ni, Co, Mn, Ca, and P was 103 mol% to obtain a mixture. The mixture was heated from room temperature to 400°C at a temperature rising rate of 4°C/min and then from 400°C to 650°C at a temperature rising rate of 2°C/min under an oxygen stream at an oxygen concentration of 95% (flow rate of 3 mL/min per kg of mixture). Thereafter, the mixture was heated from 650°C to 740°C at a temperature rising rate of 1°C/min, followed by holding for 6 hours to obtain a lithium transition metal composite oxide. The lithium transition metal composite oxide was washed with water and dried to obtain the positive electrode active material of Example 1-1.

As a result of measuring the resulting positive electrode active material using an ICP atomic emission spectrometer (iCAP6300, manufactured by Thermo Fisher Scientific), the elements listed in Table 1 below were confirmed except for Li and O. As a result of measuring the element concentration distribution in the cross section of the positive electrode active material using time-of-flight secondary ion mass spectrometry (TOF-SIMS), the normalized intensity ratio ($I_{P\_OUT}/I_{P\_IN}$) of P was 70.0, and the normalized intensity ratio ($I_{Ca+Sr\_OUT}/I_{Ca+Sr\_IN}$) of Ca and Sr was 2.5 each. From the results of X-ray diffraction measurement, the ratio m/n of the half-widths of the positive electrode active material was 0.79. In addition, the proportion of metal elements other than Li present in the Li layer was 1.8 mol% relative to the total number of moles of elements excluding Li and O in the lithium transition metal composite oxide serving as a positive electrode active material, and the lithium transition metal composite oxide had a crystallite size s of 543 Å.

[Production of Positive Electrode]

A positive electrode mixture slurry was prepared by mixing 95 parts by mass of the positive electrode active material, 3 parts by mass of acetylene black (AB), and 2 parts by mass of polyvinylidene fluoride (PVDF), and further adding an appropriate amount of N-methyl-2-pyrrolidone (NMP). Subsequently, the positive electrode mixture slurry was applied to both surfaces of a positive electrode core made of aluminum foil, the coating was dried, then rolled with a rolling roller, and cut into a predetermined electrode size to obtain a positive electrode. Note that an uncoated portion, in which the surface of the positive electrode core was uncoated, was partially prepared on the positive electrode.

[Production of Negative Electrode]

As a negative electrode active material, natural graphite was used. The negative electrode active material, sodium carboxymethyl cellulose (CMC-Na), and styrene-butadiene rubber (SBR) were mixed in an aqueous solution at a solid content mass ratio of 100:1:1 to prepare a negative electrode mixture slurry. Subsequently, the negative electrode mixture slurry was applied to both surfaces of a negative electrode core made of copper foil, the coating was dried, then rolled with a rolling roller, and cut into a predetermined electrode size to obtain a negative electrode. Note that an uncoated portion, in which the surface of the negative electrode core was uncoated, was partially prepared on the negative electrode.

[Preparation of Non-Aqueous Electrolyte]

Ethylene carbonate (EC), ethyl methyl carbonate (EMC), and dimethyl carbonate (DMC) were mixed at a volume ratio of 3:3:4. Lithium hexafluorophosphate ($LiPF_6$) was then dissolved in the resulting mixed solvent so that the concentration was 1.2 mol/L to prepare a non-aqueous electrolyte.

[Production of Test Cell]

A positive electrode lead was attached to the uncoated portion of the positive electrode, a negative electrode lead was attached to the uncoated portion of the negative electrode, and the positive electrode and the negative electrode were spirally wound with a polyolefin separator interposed therebetween, followed by press molding in a radial direction to produce a flat wound electrode assembly. This electrode assembly was housed in an outer case composed of an aluminum laminate sheet, the non-aqueous electrolyte was injected therein, and then an opening portion of the outer case was sealed to obtain a test cell.

[Evaluation of Heat Generation Rate]

The above test cell was charged to 4.2 V at a constant current of 0.3 C under an environmental temperature of 25°C and then charged at a constant voltage of 4.2 V until the current decreased to 0.02 C, thereby attaining a charged state. Subsequently, the test cell in the charged state was set in an accelerated rate calorimeter (ARC, manufactured by Thermal Hazard Technology), and the cell temperature was monitored using a thermocouple attached to the test cell, thereby measuring the heat generation rate (°C/min) of the test cell. The test cell was held for 20 minutes under an environment of a measurement start temperature of 80°C and when no temperature rise of greater than or equal to 0.02°C/min was detected, the environmental temperature was increased by 5°C and the cell was held again for 20 minutes to measure the heat generation rate. As described above, the environmental temperature was increased in increments of 5°C, and the measurement was continued until a temperature rise of greater than or equal to 0.02°C/min was detected. The onset of self-heating was defined as a temperature rise of greater than or equal to 0.02°C/min and was compared with the heat generation rate measured 8 hours after the onset of self-heating.

<Example 1-2>

A test cell was produced and evaluated in the same manner as in Example 1-1, except that in the production of the positive electrode active material, a composite hydroxide represented by $[Ni_{0.92}Co_{0.05}Al_{0.03}](OH)_2$ was used to obtain a metal oxide; $Ca_3(PO_4)_2$ was added in the firing step so that the molar ratio of Ca to the total amount of metal elements was 0.6 mol% and the molar ratio of P was 0.4 mol%; the mixture was heated from room temperature to 300°C at a temperature rising rate of 4°C/min, from 300°C to 500°C at a temperature rising rate of 3°C/min, from 500°C to 650°C at a temperature rising rate of 2°C/min, and then from 650°C to 700°C at a temperature rising rate of 1°C/min, followed by holding for 5 hours to obtain a lithium transition metal composite oxide.

<Example 1-3>

A test cell was produced and evaluated in the same manner as in Example 1-1 except that the positive electrode active material was produced as follows.

(1) A composite hydroxide represented by $[Ni_{0.90}Mn_{0.08}Al_{0.02}](OH)_2$ was used to obtain a metal oxide.
(2) In the firing step, $CaHPO_4$, $TiO_2$, and $Nb_2O_5$ were added so that the molar ratios relative to the total amount of metal elements were 0.5 mol% each for Ca and P, 0.5 mol% for Ti, and 0.5 mol% for Nb.
(3) The conditions in the firing step were modified. The oxygen flow rate was changed to 5 L/min per kg of the mixture. The mixture was heated from room temperature to 300°C at a temperature rising rate of 4°C/min, then from 300°C to 550°C at a temperature rising rate of 3°C/min, and held at 550°C for 4 hours. Thereafter, the mixture was heated from 550°C to 680°C at a temperature rising rate of 3°C/min and then from 680°C to 750°C at a temperature rising rate of 0.8°C/min, followed by holding for 6 hours to obtain a lithium transition metal composite oxide.

<Example 1-4>

A test cell was produced and evaluated in the same manner as in Example 1-1 except that the positive electrode active material was produced as follows.

(1) A composite hydroxide represented by $[Ni_{0.90}Co_{0.02}Mn_{0.06}Al_{0.02}](OH)_2$ was used to obtain a metal oxide.
(2) In the firing step, $CaHPO_4$, $Sr(OH)_2$, $Nb_2O_5$, and $Sb_2O_3$ were added so that the molar ratios relative to the total amount of metal elements were 1 mol% each for Ca and P, 0.5 mol% for Sr, 0.4 mol% for Nb, and 0.1 mol% for Sb.
(3) The conditions in the firing step were modified. The mixture was heated from 650°C to 750°C at a temperature rising rate of 1°C/min, followed by holding for 6 hours to obtain a lithium transition metal composite oxide.
(4) Washing and drying were performed, and $H_3BO_3$ was mixed with the obtained lithium transition metal composite oxide so that the molar ratio of B to the total amount of Ni, Co, Mn, and Al was 1 mol%, followed by heat treatment at 400°C in an oxygen stream.

<Example 1-5>

A test cell was produced and evaluated in the same manner as in Example 1-1 except that, in the production of the positive electrode active material, a metal oxide was obtained using a composite hydroxide represented by $[Ni_{0.90}Co_{0.02}Mn_{0.08}](OH)_2$, and $CaHPO_4$, $Sr(OH)_2$, $ZrO_2$, $SiO_2$, and $Sb_2O_3$ were added in the firing step so that the molar ratios relative to the total amount of metal elements were 0.5 mol% each for Ca and P, 0.1 mol% for Sr, 0.25 mol% for Zr, 0.25 mol% for Si, and 0.4 mol% for Sb.

<Example 1-6>

A test cell was produced and evaluated in the same manner as in Example 1-1 except that the positive electrode active material was produced as follows.

(1) A composite hydroxide represented by $[Ni_{0.90}Mn_{0.08}Al_{0.02}](OH)_2$ was used to obtain a metal oxide.
(2) In the firing step, $CaHPO_4$, $Ca(OH)_2$, $Sr(OH)_2$, and $Nb_2O$ were added so that the molar ratios relative to the total amount of metal elements were 0.6 mol% for Ca, 0.3 mol% for P, 0.1 mol% for Sr, and 0.5 mol% for Nb.
(3) The conditions in the firing step were modified. The oxygen flow rate was changed to 5 L/min per kg of the mixture. The mixture was heated from room temperature to 300°C at a temperature rising rate of 4°C/min, then from 300°C to 550°C at a temperature rising rate of 3°C/min, and held at 550°C for 4 hours. Thereafter, the mixture was heated from 550°C to 680°C at a temperature rising rate of 3°C/min and then from 680°C to 750°C at a temperature rising rate of 0.8°C/min, followed by holding for 6 hours to obtain a lithium transition metal composite oxide.
(4) Washing and drying were performed, and $H_3BO_3$ was added to the obtained lithium transition metal composite oxide so that the molar ratio of B to the total amount of Ni, Mn, and Al was 0.5 mol%, followed by heat treatment at 400°C in an air stream.

<Comparative Example 1-1>

A test cell was produced and evaluated in the same manner as in Example 1-1 except that, in the production of the positive electrode active material, P raw material was not added, and in the firing step, $Ca(OH)_2$ and $WO_3$ were added so that the molar ratios relative to the total amount of metal elements were 0.5 mol% for Ca and 0.5 mol% for W.

<Comparative Example 1-2>

A test cell was produced and evaluated in the same manner as in Example 1-1, except that, in the production of the positive electrode active material, no Ca source was not added, and in the firing step, $Nb_2O$ and $P_2O_5$ were added so that the molar ratios relative to the total amount of metal elements were 0.1 mol% for Nb and 2 mol% for P.

<Comparative Example 1-3>

A test cell was produced and evaluated in the same manner as in Example 1-1 except that the positive electrode active material was produced as follows.

(1) A composite hydroxide represented by $[Ni_{0.92}Co_{0.05}Al_{0.03}](OH)_2$ was used to obtain a metal oxide.
(2) In the firing step, no Ca source or P source was added.
(3) The conditions in the firing step were modified. The mixture was heated from room temperature to 300°C at a temperature rising rate of 4°C/min, from 300°C to 500°C at a temperature rising rate of 3°C/min, and then from 500°C to 650°C at a temperature rising rate of 2°C/min. Thereafter, the mixture was heated from 650°C to 700°C at a temperature rising rate of 1°C/min, followed by holding for 5 hours to obtain a lithium transition metal composite oxide.

<Comparative Example 1-4>

A test cell was produced and evaluated in the same manner as in Example 1-1 except that the positive electrode active material was produced as follows.

(1) In the firing step, $CaHPO_4$ and $Sr(OH)_2$ were added so that the molar ratios relative to the total amount of metal elements were 1 mol% for Ca and P, and 1 mol% for Sr.
(2) The conditions in the firing step were modified. The mixture was heated from room temperature to 400°C at a temperature rising rate of 4°C/min, then from 400°C to 700°C at a temperature rising rate of 5°C/min. Thereafter, the mixture was heated from 700°C to 740°C at a temperature rising rate of 4°C/min, followed by holding for 2 hours to obtain a lithium transition metal composite oxide.

<Example 2-1>

A test cell was produced and evaluated in the same manner as in Example 1-1 except that the positive electrode active material was produced as follows.

(1) A composite hydroxide represented by $[Ni_{0.80}Co_{0.10}Mn_{0.10}](OH)_2$ was used to obtain a metal oxide.
(2) In the firing step, $Ca(H_2PO_4)_2$ and $SrHPO_4$ were added so that the molar ratios relative to the total amount of metal elements were 0.5 mol% for Ca, 0.25 mol% for Sr, and 1.25 mol% for P.
(3) The conditions in the firing step were modified. The mixture was heated from room temperature to 400°C at a temperature rising rate of 4°C/min, then from 400°C to 650°C at a temperature rising rate of 2°C/min. Thereafter, the mixture was heated from 650°C to 800°C at a temperature rising rate of 1°C/min, followed by holding for 10 hours to obtain a lithium transition metal composite oxide.

<Example 2-2>

A test cell was produced and evaluated in the same manner as in Example 1-1 except that the positive electrode active material was produced as follows.

(1) A composite hydroxide represented by $[Ni_{0.83}Co_{0.12}Mn_{0.05}](OH)_2$ was used to obtain a metal oxide.
(2) In the firing step, $SrHPO_4$ was added so that the molar ratios relative to the total amount of metal elements were 0.75 mol% for Sr and 0.75 mol% for P.
(3) The conditions in the firing step were modified. The mixture was heated from room temperature to 300°C at a temperature rising rate of 5°C/min, then from 300°C to 550°C at a temperature rising rate of 2°C/min, and held at 550°C for 3 hours. Thereafter, the mixture was heated from 550°C to 800°C at a temperature rising rate of 1°C/min, followed by holding for 10 hours to obtain a lithium transition metal composite oxide.

<Comparative Example 2-1>

A test cell was produced and evaluated in the same manner as in Example 2-1 except that the positive electrode active material was produced as follows.

(1) In the firing step, P raw material was not added, and $Ca(OH)_2$ was added so that the molar ratio of Ca to the total amount of metal elements was 1 mol%.
(2) The conditions in the firing step were modified. The mixture was heated from room temperature to 400°C at a temperature rising rate of 4°C/min, then from 400°C to 650°C at a temperature rising rate of 2°C/min. Thereafter, the mixture was heated from 650°C to 780°C at a temperature rising rate of 1°C/min, followed by holding for 10 hours to obtain a lithium transition metal composite oxide.

<Comparative Example 2-2>

A test cell was produced and evaluated in the same manner as in Example 2-1 except that the positive electrode active material was produced as follows.

(1) In the firing step, P raw material was not added, and $Ca(OH)_2$ was added so that the molar ratio of Ca to the total amount of metal elements was 0.5 mol%.
(2) The conditions in the firing step were modified. The mixture was heated from room temperature to 400°C at a temperature rising rate of 4°C/min, then from 400°C to 650°C at a temperature rising rate of 2°C/min. Thereafter, the mixture was heated from 650°C to 780°C at a temperature rising rate of 1°C/min, followed by holding for 10 hours to obtain a lithium transition metal composite oxide.
(3) Washing and drying were performed, and $Li_3PO_4$ was added and mixed with the obtained lithium transition metal composite oxide so that the molar ratio of P to the total amount of Ni, Co, and Mn was 0.5 mol%.

Tables 1 and 2 show the evaluation results of the test cells in Examples and Comparative Examples. Tables 1 and 2 further list the normalized intensity ratio of P ($I_{P\_OUT}/I_{P\_IN}$), the normalized intensity ratio of Ca and Sr ($I_{Ca+Sr\_OUT}/I_{Ca+Sr\_IN}$), the ratio m/n of the half-widths, the proportion of metal elements other than Li present in the Li layer, and the crystallite size s in Examples and Comparative Examples. The heat generation rates of the test cells other than Comparative Example 1-1 in Table 1 were each expressed relatively, taking the heat generation rate of the test cell in Comparative Example 1-1 as ±0. The heat generation rates of the test cells other than Comparative Example 2-1 in Table 2 were each expressed relatively, taking the heat generation rate of the test cell in Comparative Example 2-1 as ±0.

[Table 1]

| | Composition of positive electrode active material [mol%] | | | | | $I_{Ca+Sr\_OUT}/I_{Ca+Sr\_IN}$ | $I_{P\_OUT}/I_{P\_IN}$ | Ratio of half-width m/n | Proportion of metal element other than Li in Li layer [%] | Crystallite size s [Å] | Heat generation rate [°C/min] |
|---|---|---|---|---|---|---|---|---|---|---|---|
| | Ni | Me | Ca | Sr | P | | | | | | |
| Example 1-1 | 89.5 | Co(6), Mn(4) | 0.25 | 0 | 0.25 | 2.5 | 70.0 | 0.79 | 1.8 | 543 | -4 |
| Example 1-2 | 91 | Co(5), Al(3) | 0.6 | 0 | 0.4 | 0.7 | 1.2 | 0.76 | 0.9 | 341 | -2 |
| Example 1-3 | 88 | Mn(8), Al(2) Ti(0.5), Nb(0.5) | 0.5 | 0 | 0.5 | 1.2 | 1.9 | 0.83 | 3.8 | 389 | -6 |
| Example 1-4 | 86 | Co(2), Mn(6) Al(2), Nb(0.4) Sb(0.1), B(1) | 1 | 0.5 | 1 | 10.6 | 72.1 | 0.79 | 2.9 | 319 | -10 |
| Example 1-5 | 88 | Co(2), Mn(8) Zr(0.25), Si(0.25) Sb(0.4) | 0.5 | 0.1 | 0.5 | 12.1 | 1.5 | 0.81 | 4.2 | 311 | -9 |
| Example 1-6 | 88 | Mn(8), Al(2) Nb(0.5), B(0.5) | 0.6 | 0.1 | 0.3 | 4.3 | 83.1 | 0.78 | 2.6 | 352 | -9 |
| Comparative Example 1-1 | 89 | Co(6), Mn(4) W(0.5) | 0.5 | 0 | 0 | 0.9 | 0 | 0.76 | 3.9 | 416 | ±0 |
| Comparative Example 1-2 | 87 | Co(6), Mn(4) Nb(1) | 0 | 0 | 2 | 0 | 90.1 | 0.75 | 8.2 | 341 | +5 |
| Comparative Example 1-3 | 92 | Co(5), Al(3) | 0 | 0 | 0 | 0 | 0 | 0.85 | 0.8 | 304 | +10 |
| Comparative Example 1-4 | 87 | Co(6), Mn(4) | 1 | 1 | 1 | 1.7 | 53.8 | 0.71 | 1.3 | 718 | +3 |

[Table 2]

| | Composition of positive electrode active mate rial [mol%] | | | | | $I_{Ca+Sr\_OUT}/I_{Ca+Sr\_IN}$ | $I_{P\_OUT}/I_{P\_IN}$ | Ratio of half -width m/n | Proportion of metal ele ment other than Li in Li layer [%] | Crystall ite size s [ Å] | Heat generation rate [°C/min] |
|---|---|---|---|---|---|---|---|---|---|---|---|
| | Ni | Me | Ca | Sr | P | | | | | | |
| Example 2-1 | 78 | Co(10), Mn(10) | 0.5 | 0.25 | 1.25 | 1.1 | 121.2 | 0.77 | 1.1 | 609 | -4 |
| Example 2-2 | 81.5 | Co(12), Mn(5) | 0 | 0.75 | 0.75 | 0.6 | 1.2 | 0.77 | 0.9 | 627 | -1 |
| Comparative Example 2-1 | 79 | Co(10), Mn(10) | 1 | 0 | 0 | 3.5 | 0 | 0.78 | 1.9 | 501 | ±0 |
| Comparative Example 2-2 | 79 | Co(10), Mn(10) | 0.5 | 0 | 0.5 | 4.1 | 375.0 | 0.80 | 1.9 | 501 | ±0 |

In Tables 1 and 2, the test cells in Examples exhibited a lower heat generation rate than the test cells in Comparative Examples. Accordingly, it is understood that the safety of the battery is improved when a lithium transition metal composite oxide having a Ni content of greater than or equal to 75% contains P and at least one of Ca and Sr at predetermined amounts, the ratio m/n of the half-width m of the diffraction peak of the

(003) plane to the half-width n of the diffraction peak of the (110) plane in the X-ray diffraction pattern obtained by X-ray diffraction satisfies $0.75 \leq m/n \leq 0.85$, and furthermore, when the element concentration distribution of the cross section of the lithium transition metal composite oxide as analyzed using time-of-flight secondary ion mass spectrometry has the ratio $I_{P\_OUT}/I_{P\_IN}$ of the normalized intensity $I_{P\_OUT}$ of P on the surfaces of the secondary particles to the normalized intensity $I_{P\_IN}$ of P inside the secondary particles satisfying $1 \leq I_{P\_OUT}/I_{P\_IN} \leq 150$.

The present disclosure will be further described with reference to embodiments below.

Constitution 1:

A positive electrode active material for a non-aqueous electrolyte secondary battery, including:

a lithium transition metal composite oxide, wherein
the lithium transition metal composite oxide contains Ni, P, and at least one of Ca or Sr and includes secondary particles formed by aggregation of primary particles;
a Ni content in the lithium transition metal composite oxide, relative to the total number of moles of elements excluding Li and O, satisfies $75$ mol% $\leq$ Ni content $\leq 95$ mol%;
a P content in the lithium transition metal composite oxide, relative to the total number of moles of elements excluding Li and O, satisfies $0$ mol% $<$ P content $\leq 2$ mol%;
a total content of Ca and Sr in the lithium transition metal composite oxide, relative to the total number of moles of elements excluding Li and O, satisfies $0$ mol% $<$ Ca content + Sr content $\leq 2$ mol%;
in an X-ray diffraction pattern obtained by X-ray diffraction, a ratio m/n of a half-width m of a diffraction peak of a (003) plane to a half-width n of a diffraction peak of a (110) plane satisfies $0.75 \leq m/n \leq 0.85$; and
in an element concentration distribution of a cross section of the lithium transition metal composite oxide as analyzed using time-of-flight secondary ion mass spectrometry, a ratio $I_{P\_OUT}/I_{P\_IN}$ of a normalized intensity $I_{P\_OUT}$ of P on surface of the secondary particles to a normalized intensity $I_{P\_IN}$ of P inside the secondary particles satisfies $1 \leq I_{P\_OUT}/I_{P\_IN} \leq 150$.

Constitution 2:

The positive electrode active material for a non-aqueous electrolyte secondary battery according to Constitution 1, wherein Ca and Sr are present on surfaces of the primary particles or in a region less than or equal to 30 nm from surfaces of the primary particles in an internal direction.

Constitution 3:

The positive electrode active material for a non-aqueous electrolyte secondary battery according to Constitution 1 or 2, wherein P is present on surfaces of the primary particles or in a region less than or equal to 30 nm from surfaces of the primary particles in an internal direction.

Constitution 4:

The positive electrode active material for a non-aqueous electrolyte secondary battery according to any one of Constitutions 1 to 3, wherein
in the element concentration distribution of the cross section of the lithium transition metal composite oxide as analyzed using time-of-flight secondary ion mass spectrometry, a ratio $I_{Ca+Sr\_OUT}/I_{Ca+Sr\_IN}$ of a normalized intensity $I_{Ca+Sr\_OUT}$ of Ca and Sr on the surfaces of the secondary particles to a normalized intensity $I_{Ca+Sr\_IN}$ of Ca and Sr inside the secondary particles satisfies $0.7 \leq I_{Ca+Sr\_OUT}/I_{Ca+Sr\_IN} \leq 20$.

Constitution 5:

The positive electrode active material for a non-aqueous electrolyte secondary battery according to Constitution 4, wherein $I_{P\_OUT}/I_{P\_IN}$ and $I_{Ca+Sr\_OUT}/I_{Ca+Sr\_IN}$ satisfy $I_{P\_OUT}/I_{P\_IN} + I_{Ca+Sr\_OUT}/I_{Ca+Sr\_IN} \geq 2$.

Constitution 6:

The positive electrode active material for a non-aqueous electrolyte secondary battery according to any one of Constitutions 1 to 5, wherein

the lithium transition metal composite oxide further contains B, and
a B content in the lithium transition metal composite oxide, relative to the total number of moles of elements excluding Li and O, satisfies 0 mol% < B content ≤ 3 mol%. Constitution 7:

The positive electrode active material for a non-aqueous electrolyte secondary battery according to any one of Constitutions 1 to 6, wherein

the lithium transition metal composite oxide further contains Sb, and
a Sb content in the lithium transition metal composite oxide, relative to the total number of moles of elements excluding Li and O, satisfies 0 mol% < Sb content ≤ 1 mol%. Constitution 8:

The positive electrode active material for a non-aqueous electrolyte secondary battery according to any one of Constitutions 1 to 7, wherein the lithium transition metal composite oxide contains both Ca and Sr.

Constitution 9:

The positive electrode active material for a non-aqueous electrolyte secondary battery according to any one of Constitutions 1 to 8, wherein the Ca content is greater than the Sr content.

Constitution 10:

The positive electrode active material for a non-aqueous electrolyte secondary battery according to any one of Constitutions 1 to 9, wherein

the lithium transition metal composite oxide has a layered structure, and
a proportion of metal elements other than Li present in a Li layer of the layered structure, relative to the total number of moles of elements excluding Li and O in the lithium transition metal composite oxide, is less than or equal to 8 mol%.

Constitution 11:

The positive electrode active material for a non-aqueous electrolyte secondary battery according to any one of Constitutions 1 to 10, wherein the lithium transition metal composite oxide has a crystallite size s of $300 \, \text{Å} \le s \le 700 \, \text{Å}$, as calculated from a half-width of a diffraction peak of a (104) plane in the X-ray diffraction pattern obtained by X-ray diffraction according to Scherrer equation.

Constitution 12:

The positive electrode active material for a non-aqueous electrolyte secondary battery according to any one of Constitutions 1 to 11, wherein a peak derived from $CaCO_3$ is within a range of $29.4 \pm 0.3°$ in the X-ray diffraction pattern measured by X-ray diffraction.

Constitution 13:

A non-aqueous electrolyte secondary battery, comprising:

a positive electrode including the positive electrode active material for a non-aqueous electrolyte secondary battery according to any one of Constitutions 1 to 12;
a negative electrode; and
a non-aqueous electrolyte.

REFERENCE SIGNS LIST

10 Secondary battery, 11 Positive electrode, 12 Negative electrode, 13 Separator, 14 Electrode assembly, 16 Outer case, 17 Sealing assembly, 18, 19 Insulating plate, 20 Positive lead, 21 Negative lead, 22 Grooved portion, 23 Internal terminal plate, 24 Lower vent member, 25 Insulating member, 26 Upper vent member, 27 Cap, 28 Gasket

**Claims**

1. A positive electrode active material for a non-aqueous electrolyte secondary battery, including:

    a lithium transition metal composite oxide, wherein
    the lithium transition metal composite oxide contains Ni, P, and at least one of Ca or Sr and includes secondary particles formed by aggregation of primary particles;
    a Ni content in the lithium transition metal composite oxide, relative to the total number of moles of elements excluding Li and O, satisfies 75 mol% $\leq$ Ni content $\leq$ 95 mol%;
    a P content in the lithium transition metal composite oxide, relative to the total number of moles of elements excluding Li and O, satisfies 0 mol% < P content $\leq$ 2 mol%;
    a total content of Ca and Sr in the lithium transition metal composite oxide, relative to the total number of moles of elements excluding Li and O, satisfies 0 mol% < Ca content + Sr content $\leq$ 2 mol%;
    in an X-ray diffraction pattern obtained by X-ray diffraction, a ratio m/n of a half-width m of a diffraction peak of a (003) plane to a half-width n of a diffraction peak of a (110) plane satisfies 0.75 $\leq$ m/n $\leq$ 0.85; and
    in an element concentration distribution of a cross section of the lithium transition metal composite oxide as analyzed using time-of-flight secondary ion mass spectrometry, a ratio $I_{P\_OUT}/I_{P\_IN}$ of a normalized intensity $I_{P\_OUT}$ of P on surface of the secondary particles to a normalized intensity $I_{P\_IN}$ of P inside the secondary particles satisfies 1 $\leq$ $I_{P\_OUT}/I_{P\_IN}$ $\leq$ 150.

2. The positive electrode active material for a non-aqueous electrolyte secondary battery according to claim 1, wherein Ca and Sr are present on surfaces of the primary particles or in a region less than or equal to 30 nm from surfaces of the primary particles in an internal direction.

3. The positive electrode active material for a non-aqueous electrolyte secondary battery according to claim 1, wherein P is present on surfaces of the primary particles or in a region less than or equal to 30 nm from surfaces of the primary particles in an internal direction.

4. The positive electrode active material for a non-aqueous electrolyte secondary battery according to claim 1, wherein in the element concentration distribution of the cross section of the lithium transition metal composite oxide as analyzed using time-of-flight secondary ion mass spectrometry, a ratio $I_{Ca+Sr\_OUT}/I_{Ca+Sr\_IN}$ of a normalized intensity $I_{Ca+Sr\_OUT}$ of Ca and Sr on the surfaces of the secondary particles to a normalized intensity $I_{Ca+Sr\_IN}$ of Ca and Sr inside the secondary particles satisfies 0.7 $\leq$ $I_{Ca+Sr\_OUT}/I_{Ca+Sr\_IN}$ $\leq$ 20.

5. The positive electrode active material for a non-aqueous electrolyte secondary battery according to claim 4, wherein $I_{P\_OUT}/I_{P\_IN}$ and $I_{Ca+Sr\_OUT}/I_{Ca+Sr\_IN}$ satisfy $I_{P\_OUT}/I_{P\_IN}$ + $I_{Ca+Sr\_OUT}/I_{Ca+Sr\_IN}$ $\geq$ 2.

6. The positive electrode active material for a non-aqueous electrolyte secondary battery according to claim 1, wherein

    the lithium transition metal composite oxide further contains B, and
    a B content in the lithium transition metal composite oxide, relative to the total number of moles of elements excluding Li and O, satisfies 0 mol% < B content $\leq$ 3 mol%.

7. The positive electrode active material for a non-aqueous electrolyte secondary battery according to claim 1, wherein

    the lithium transition metal composite oxide further contains Sb, and
    a Sb content in the lithium transition metal composite oxide, relative to the total number of moles of elements excluding Li and O, satisfies 0 mol% < Sb content $\leq$ 1 mol%.

8. The positive electrode active material for a non-aqueous electrolyte secondary battery according to claim 1, wherein the lithium transition metal composite oxide contains both Ca and Sr.

9. The positive electrode active material for a non-aqueous electrolyte secondary battery according to claim 1, wherein the Ca content is greater than the Sr content.

10. The positive electrode active material for a non-aqueous electrolyte secondary battery according to claim 1, wherein

the lithium transition metal composite oxide has a layered structure, and
a proportion of metal elements other than Li present in a Li layer of the layered structure, relative to the total number of moles of elements excluding Li and O in the lithium transition metal composite oxide, is less than or equal to 8 mol%.

11. The positive electrode active material for a non-aqueous electrolyte secondary battery according to claim 1, wherein the lithium transition metal composite oxide has a crystallite size s of $300\ \text{Å} \le s \le 700\ \text{Å}$, as calculated from a half-width of a diffraction peak of a (104) plane in the X-ray diffraction pattern obtained by X-ray diffraction according to Scherrer equation.

12. The positive electrode active material for a non-aqueous electrolyte secondary battery according to claim 1, wherein a peak derived from $CaCO_3$ is within a range of $29.4 \pm 0.3°$ in the X-ray diffraction pattern measured by X-ray diffraction.

13. A non-aqueous electrolyte secondary battery, comprising:

a positive electrode including the positive electrode active material for a non-aqueous electrolyte secondary battery according to any one of claims 1 to 12;
a negative electrode; and
a non-aqueous electrolyte.

# Figure 1

# Figure 2

# EP 4 787 483 A1

## INTERNATIONAL SEARCH REPORT

International application No.

**PCT/JP2024/032538**

### A. CLASSIFICATION OF SUBJECT MATTER

*H01M 4/525*(2010.01)i; *H01M 4/36*(2006.01)i
FI: H01M4/525; H01M4/36 C

According to International Patent Classification (IPC) or to both national classification and IPC

### B. FIELDS SEARCHED

Minimum documentation searched (classification system followed by classification symbols)

H01M4/36; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2023/155215 A1 (BTR NANO TECH CO., LTD.) 24 August 2023 (2023-08-24) | 1-13 |
| A | WO 2022/130982 A1 (PANASONIC INTELLECTUAL PROPERTY MANAGEMENT CO., LTD.) 23 June 2022 (2022-06-23) | 1-13 |
| A | WO 2012/124240 A1 (SANYO ELECTRIC CO., LTD.) 20 September 2012 (2012-09-20) | 1-13 |
| A | US 2022/0140331 A1 (SAMSUNG SDI CO., LTD.) 05 May 2022 (2022-05-05) | 1-13 |
| P, A | WO 2024/004714 A1 (PANASONIC INTELLECTUAL PROPERTY MANAGEMENT CO., LTD.) 04 January 2024 (2024-01-04) | 1-13 |

☐ Further documents are listed in the continuation of Box C.       ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **11 November 2024** | **03 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/032538**

| Patent document cited in search report | | | Publication date (day/month/year) | Patent family member(s) | | | Publication date (day/month/year) |
|---|---|---|---|---|---|---|---|
| WO | 2023/155215 | A1 | 24 August 2023 | JP | 2024-511238 | A | |
| | | | | US | 2024/0162425 | A1 | |
| | | | | EP | 4290615 | A1 | |
| | | | | CN | 114583153 | A | |
| WO | 2022/130982 | A1 | 23 June 2022 | US | 2024/0038970 | A1 | |
| | | | | EP | 4265570 | A1 | |
| | | | | CN | 116670075 | A | |
| WO | 2012/124240 | A1 | 20 September 2012 | US | 2013/0323606 | A1 | |
| | | | | EP | 2685532 | A1 | |
| | | | | CN | 103415947 | A | |
| US | 2022/0140331 | A1 | 05 May 2022 | KR | 10-2022-0057686 | A | |
| WO | 2024/004714 | A1 | 04 January 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6749973 B